# EUROPEAN PATENT APPLICATION

(11) **EP 4 270 815 A1**
(43) Date of publication of application: **01.11.2023**
(21) Application number: 23169943.0
(22) Date of filing: 26.04.2023
(51) Int. Cl.: H04B 7/155, H04B 7/06, H04B 7/08

(54) **METHOD AND APPARATUS FOR RELAYING RADIO SIGNAL IN WIRELESS NETWORK**

(30) Priority: 26.04.2022 KR 20220051638; 17.04.2023 KR 20230050038
(71) Applicant: KT Corporation, Seongnam-si, Gyeonggi-do 13606 (KR)
(72) Inventor: PARK, Kyujin, 13606 Gyeonggi-do (KR)
(74) Representative: Brevalex

(57) **Abstract**

Provided are a method and apparatus for relaying a signal in a wireless network. A method of controlling, by a base station, relay of a radio signal includes setting a beam index for a beam of a repeater used for communication between the repeater and a terminal, configuring side control information for beam control of the repeater based on the beam index, and transmitting the side control information to the repeater, in which the side control information is divided into semi-static beam indication information and dynamic beam indication information.

## Description

### CROSS-REFERENCE TO RELATED APPLICATION

This application claims priority to and the benefit of Korean Patent Application Nos. 10-2022-0051638, filed on April 26, 2022 and 10-2023-0050038, filed on April 17, 2023, the disclosure of which is incorporated herein by reference in its entirety.

### BACKGROUND

### 1. Field of the Invention

The present disclosure relates to a method and apparatus for relaying a radio signal in a wireless network of a next-generation radio access network (hereinafter referred to as "new radio [NR]").

### 2. Discussion of Related Art

Recently, the 3rd generation partnership project (3GPP) has approved the "Study on New Radio Access Technology", which is a study item for research on next-generation/5G radio access technology (hereinafter, referred to as "new radio" or "NR"). On the basis of the Study on New Radio Access Technology, Radio Access Network Working Group 1 (RAN WG1) has been discussing frame structures, channel coding and modulation, waveforms, multiple access methods, and the like for the new radio (NR). It is required to design the NR not only to provide an improved data transmission rate as compared with the long term evolution (LTE)/LTE-Advanced, but also to meet various requirements in detailed and specific usage scenarios.

An enhanced mobile broadband (eMBB), massive machine-type communication (mMTC), and ultra reliable and low latency communication (URLLC) are proposed as representative usage scenarios of the NR. In order to meet the requirements of the individual scenarios, it is required to design the NR to have flexible frame structures, compared with the LTE/LTE-Advanced.

Because the requirements for data rates, latency, reliability, coverage, etc. are different from each other, there is a need for a method for efficiently multiplexing a radio resource unit based on different numerologies from other (e.g., subcarrier spacing, subframe, Transmission Time Interval (TTI), etc.) as a method for efficiently satisfying each usage scenario requirement through a frequency band constituting any NR system.

As a part of this aspect, when applying a repeater for wireless coverage expansion in a wireless network, a specific design is required to more efficiently relay a radio signal.

### SUMMARY OF THE INVENTION

Embodiments of the present disclosure may provide a method and apparatus for relaying a radio signal in a wireless network of new radio (NR).

According to an aspect, a method of a base station for controlling relay of a radio signal may include setting a beam index for a beam of a repeater used for communication between the repeater and a terminal, configuring side control information for beam control of the repeater based on the beam index, and transmitting the side control information to the repeater, wherein the side control information is divided into semi-static beam indication information and dynamic beam indication information.

According to another aspect, a method of a repeater for performing relay of a radio signal may include transmitting information on a beam of a repeater that allows communication between the repeater and a terminal, receiving side control information for beam control of the repeater based on a beam index, and transmitting and receiving data to and from the terminal based on the side control information, wherein the side control information is divided into semi-static beam indication information and dynamic beam indication information.

According to still another aspect, a base station for controlling relay of a radio signal may include a transmitter, a receiver, and a controller configured to control operations of the transmitter and the receiver, wherein the controller sets a beam index for a beam of a repeater used for communication between a repeater and a terminal, configures side control information for beam control of the repeater based on the beam index, and transmits the side control information to the repeater, and the side control information is divided into semi-static beam indication information and dynamic beam indication information.

According to yet another aspect, a repeater for performing relay of a radio signal may include a transmitter, a receiver, and a controller configured to control operations of the transmitter and the receiver, wherein the controller transmits information on a beam of a repeater that allows communication between a repeater and a terminal, receives side control information for beam control of the repeater configured based on a beam index for a beam of the repeater, and transmits and receives data to and from the terminal based on the side control information, and the side control information is divided into semi-static beam indication information and dynamic beam indication information.

### BRIEF DESCRIPTION OF THE DRAWINGS

The above and other aspects, features, and advantages of the present disclosure will be more apparent from the following detailed description taken in conjunction with the accompanying drawings, in which:
FIG. 1 is a view schematically illustrating an NR wireless communication system in accordance with embodiments of the present disclosure;
FIG. 2 is a view schematically illustrating a frame structure in an NR system in accordance with embodiments of the present disclosure;
FIG. 3 is a view for explaining resource grids supported by a radio access technology in accordance with embodiments of the present disclosure;
FIG. 4 is a view for explaining bandwidth parts supported by a radio access technology in accordance with embodiments of the present disclosure;
FIG. 5 is a view illustrating an example of a synchronization signal block in a radio access technology in accordance with embodiments of the present disclosure;
FIG. 6 is a signal diagram for explaining a random access procedure in a radio access technology in accordance with embodiments of the present disclosure;
FIG. 7 is a view for explaining CORESET;
FIG. 8 is a view illustrating an example of symbol level alignment among different subcarrier spacings (SCSs) in accordance with embodiments of the present disclosure;
FIG. 9 is a view schematically illustrating a bandwidth part;
FIG. 10 is a flowchart illustrating a procedure of a base station for controlling relay of a radio signal according to an embodiment of the present disclosure;
FIG. 11 is a flowchart illustrating a procedure of a repeater for controlling relay of a radio signal according to an embodiment of the present disclosure;
FIG. 12 is a diagram for describing controlling relay of a radio signal performed by a repeater between a base station and a terminal according to an embodiment of the present disclosure;
FIG. 13 is a block diagram illustrating a base station according to an embodiment of the present disclosure; and
FIG. 14 is a block diagram illustrating a relay according to an embodiment of the present disclosure.

### DETAILED DESCRIPTION OF EXEMPLARY EMBODIMENTS

Hereinafter, some embodiments of the present disclosure will be described in detail with reference to the accompanying illustrative drawings. In the drawings, like reference numerals are used to denote like elements throughout the drawings, even if they are shown on different drawings. Further, in the following description of the present disclosure, a detailed description of known functions and configurations incorporated herein will be omitted when it may make the subject matter of the present disclosure rather unclear. When the expression "include", "have", "comprise", or the like as mentioned herein is used, any other part may be added unless the expression "only" is used. When an element is expressed in the singular, the element may cover the plural form unless a special mention is explicitly made of the element.

In addition, terms, such as first, second, A, B, (A), (B) or the like may be used herein when describing components of the present disclosure. Each of these terminologies is not used to define an essence, order or sequence of a corresponding component but used merely to distinguish the corresponding component from other component(s).

In describing the positional relationship between components, if two or more components are described as being "connected", "combined", or "coupled" to each other, it should be understood that two or more components may be directly "connected", "combined", or "coupled" to each other, and that two or more components may be "connected", "combined", or "coupled" to each other with another component "interposed" therebetween. In this case, another component may be included in at least one of the two or more components that are "connected", "combined", or "coupled" to each other.

In the description of a sequence of operating methods or manufacturing methods, for example, the expressions using "after", "subsequent to", "next", "before", and the like may also encompass the case in which operations or processes are performed discontinuously unless "immediately" or "directly" is used in the expression.

Numerical values for components or information corresponding thereto (e.g., levels or the like), which are mentioned herein, may be interpreted as including an error range caused by various factors (e.g., process factors, internal or external impacts, noise, etc.) even if an explicit description thereof is not provided.

The wireless communication system in the present specification refers to a system for providing various communication services, such as a voice service and a data service, using radio resources. The wireless communication system may include a user equipment (UE), a base station, a core network, and the like.

Embodiments disclosed below may be applied to a wireless communication system using various radio access technologies. For example, the embodiments may be applied to various radio access technologies such as code division multiple access (CDMA), frequency division multiple access (FDMA), time division multiple access (TDMA), orthogonal frequency division multiple access (OFDMA), single-carrier frequency division multiple access (SC-FDMA), non-orthogonal multiple access (NOMA), or the like. In addition, the radio access technology may refer to respective generation communication technologies established by various communication organizations, such as 3GPP, 3GPP2, WiFi, Bluetooth, IEEE, ITU, or the like, as well as a specific access technology. For example, CDMA may be implemented as a wireless technology such as universal terrestrial radio access (UTRA) or CDMA2000. TDMA may be implemented as a wireless technology such as global system for mobile communications (GSM)/general packet radio service (GPRS)/enhanced data rates for GSM evolution (EDGE). OFDMA may be implemented as a wireless technology such as IEEE (Institute of Electrical and Electronics Engineers) 802.11 (Wi-Fi), IEEE 802.16 (WiMAX), IEEE 802-20, evolved UTRA (E-UTRA), and the like. IEEE 802.16m is evolution of IEEE 802.16e, which provides backward compatibility with systems based on IEEE 802.16e. UTRA is a part of a universal mobile telecommunications system (UMTS). 3GPP (3rd-generation partnership project) LTE (long-term evolution) is a part of E-UMTS (evolved UMTS) using evolved-UMTS terrestrial radio access (E-UTRA), which adopts OFDMA in a downlink and SC-FDMA in an uplink. As described above, the embodiments may be applied to radio access technologies that have been launched or commercialized, and may be applied to radio access technologies that are being developed or will be developed in the future.

The UE used in the specification must be interpreted as a broad meaning that indicates a device including a wireless communication module that communicates with a base station in a wireless communication system. For example, the UE includes user equipment (UE) in WCDMA, LTE, NR, HSPA, IMT-2020 (5G or New Radio), and the like, a mobile station in GSM, a user terminal (UT), a subscriber station (SS), a wireless device, and the like. In addition, the UE may be a portable user device, such as a smart phone, or may be a vehicle, a device including a wireless communication module in the vehicle, and the like in a V2X communication system according to the usage type thereof. In the case of a machine-type communication (MTC) system, the LTE may refer to an MTC terminal, an M2M terminal, or a URLLC terminal, which employs a communication module capable of performing machine-type communication.

A base station or a cell in the present specification refers to an end that communicates with a UE through a network and encompasses various coverage regions such as a Node-B, an evolved Node-B (eNB), a gNode-B, a low-power node (LPN), a sector, a site, various types of antennas, a base transceiver system (BTS), an access point, a point (e.g., a transmission point, a reception point, or a transmission/reception point), a relay node, a megacell, a macrocell, a microcell, a picocell, a femtocell, a remote radio head (RRH), a radio unit (RU), a small cell, and the like. In addition, the cell may be used as a meaning including a bandwidth part (BWP) in the frequency domain. For example, the serving cell may refer to an active BWP of a UE.

The various cells listed above are provided with a base station controlling one or more cells, and the base station may be interpreted as two meanings. The base station may be 1) a device for providing a megacell, a macrocell, a microcell, a picocell, a femtocell, or a small cell in connection with a wireless region, or the base station may be 2) a wireless region itself. In the above description 1), the base station may be the devices controlled by the same entity and providing predetermined wireless regions or all devices interacting with each other and cooperatively configuring a wireless region. For example, the base station may be a point, a transmission/reception point, a transmission point, a reception point, and the like according to the configuration method of the wireless region. In the above description 2), the base station may be the wireless region in which a user equipment (UE) may be enabled to transmit data to and receive data from the other UE or a neighboring base station.

In this specification, the cell may refer to coverage of a signal transmitted from a transmission/reception point, a component carrier having coverage of a signal transmitted from a transmission/reception point (or a transmission point), or a transmission/reception point itself.

An uplink (UL) refers to a scheme of transmitting data from a UE to a base station, and a downlink (DL) refers to a scheme of transmitting data from a base station to a UE. The downlink may mean communication or communication paths from multiple transmission/reception points to a UE, and the uplink may mean communication or communication paths from a UE to multiple transmission/reception points. In the downlink, a transmitter may be a part of the multiple transmission/reception points, and a receiver may be a part of the UE. In addition, in the uplink, the transmitter may be a part of the UE, and the receiver may be a part of the multiple transmission/reception points.

The uplink and downlink transmit and receive control information over a control channel, such as a physical downlink control channel (PDCCH) and a physical uplink control channel (PUCCH). The uplink and downlink transmit and receive data over a data channel such as a physical downlink shared channel (PDSCH) and a physical uplink shared channel (PUSCH). Hereinafter, the transmission and reception of a signal over a channel, such as PUCCH, PUSCH, PDCCH, PDSCH, or the like, may be expressed as "PUCCH, PUSCH, PDCCH, PDSCH, or the like is transmitted and received".

For the sake of clarity, the following description will focus on 3GPP LTE/LTE-A/NR (New Radio) communication systems, but technical features of the disclosure are not limited to the corresponding communication systems.

The 3GPP has been developing a 5G (5th-Generation) communication technology in order to meet the requirements of a next-generation radio access technology of ITU-R after studying 4G (4th-generation) communication technology. Specifically, 3GPP is developing, as a 5G communication technology, LTE-A pro by improving the LTE-Advanced technology so as to conform to the requirements of ITU-R and a new NR communication technology that is totally different from 4G communication technology. LTE-A pro and NR all refer to the 5G communication technology. Hereinafter, the 5G communication technology will be described on the basis of NR unless a specific communication technology is specified.

Various operating scenarios have been defined in NR in consideration of satellites, automobiles, new verticals, and the like in the typical 4G LTE scenarios so as to support an enhanced mobile broadband (eMBB) scenario in terms of services, a massive machine-type communication (mMTC) scenario in which UEs spread over a broad region at a high UE density, thereby requiring low data rates and asynchronous connections, and an ultra-reliability and low-latency (URLLC) scenario that requires high responsiveness and reliability and supports high-speed mobility.

In order to satisfy such scenarios, NR introduces a wireless communication system employing a new waveform and frame structure technology, a low-latency technology, a super-high frequency band (mmWave) support technology, and a forward compatible provision technology. In particular, the NR system has various technological changes in terms of flexibility in order to provide forward compatibility. The primary technical features of NR will be described below with reference to the drawings.

### <Overview of NR System>

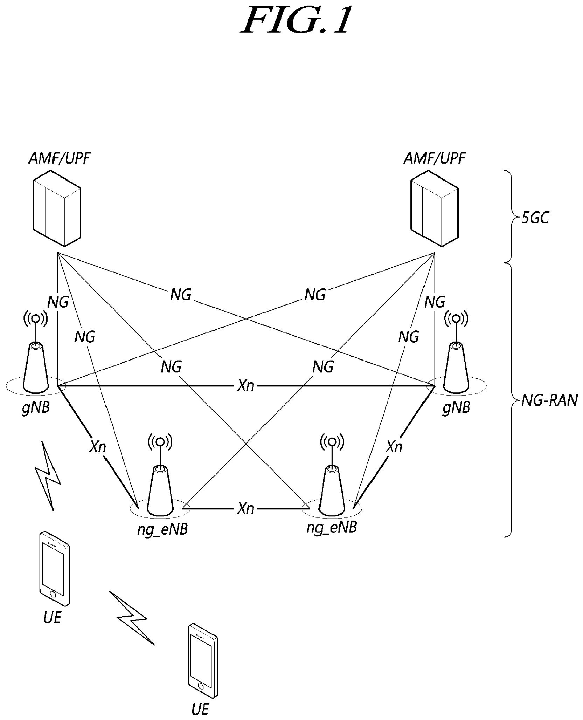

FIG. 1 is a view schematically illustrating an NR system to which the present embodiment is applicable.

Referring to FIG. 1, the NR system is divided into a 5G core network (5GC) and an NG-RAN part. The NG-RAN includes gNBs and ng-eNBs providing user plane (SDAP/PDCP/RLC/MAC/PHY) and user equipment (UE) control plane (RRC) protocol ends. The gNBs or the gNB and the ng-eNB are connected to each other through Xn interfaces. The gNB and the ng-eNB are connected to the 5GC through NG interfaces, respectively. The 5GC may be configured to include an access and mobility management function (AMF) for managing a control plane, such as a UE connection and mobility control function, and a user plane function (UPF) controlling user data. NR supports both frequency bands below 6 GHz (frequency range 1 FR1 FR1) and frequency bands equal to or greater than 6 GHz (frequency range 2 FR2 FR2).

The gNB denotes a base station that provides a UE with an NR user plane and control plane protocol end. The ng-eNB denotes a base station that provides a UE with an E-UTRA user plane and control plane protocol end. The base station described in the present specification should be understood as encompassing the gNB and the ng-eNB. However, the base station may be also used to refer to the gNB or the ng-eNB separately from each other, as necessary.

### <NR Waveform, Numerology, and Frame Structure>

NR uses a CP-OFDM waveform using a cyclic prefix for downlink transmission (DL Tx) and uses CP-OFDM or DFT-s-OFDM for uplink transmission. OFDM technology is easy to combine with a multiple-input multiple-output (MIMO) scheme and allows a low-complexity receiver to be used with high frequency efficiency.

Since the three scenarios described above have different requirements for data rates, delay rates, coverage, and the like from each other in NR, it is necessary to efficiently satisfy the requirements for each scenario over frequency bands constituting the NR system. To this end, a technique for efficiently multiplexing radio resources based on a plurality of different numerologies has been proposed.

Specifically, the NR transmission numerology is determined on the basis of subcarrier spacing and a cyclic prefix (CP). As shown in Table 1 below, "µ" is used as an exponential value of 2 so as to be changed exponentially on the basis of 15 kHz.

**[Table 1]**

| µ | Subcarrier spacing | Cyclic prefix | Supported for data | Supported for synch |
|---|---|---|---|---|
| 0 | 15 | Normal | Yes | Yes |
| 1 | 30 | Normal | Yes | Yes |
| 2 | 60 | Normal, Extended | Yes | No |
| 3 | 120 | Normal | Yes | Yes |
| 4 | 240 | Normal | No | Yes |

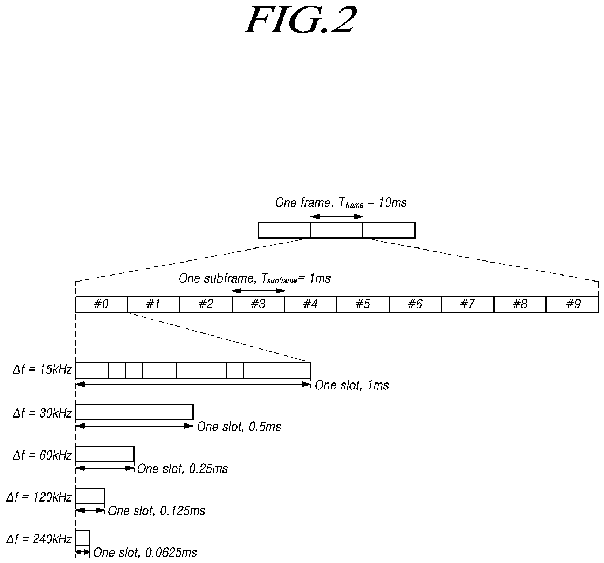

As shown in Table 1 above, NR may have five types of numerologies according to subcarrier spacing. This is different from LTE, which is one of the 4G-communication technologies, in which the subcarrier spacing is fixed to 15 kHz. Specifically, in NR, subcarrier spacing used for data transmission is 15, 30, 60, or 120 kHz, and subcarrier spacing used for synchronization signal transmission is 15, 30, 120, or 240 kHz. In addition, an extended CP is applied only to the subcarrier spacing of 60 kHz. A frame that includes 10 subframes each having the same length of 1 ms and has a length of 10 ms is defined in the frame structure in NR. One frame may be divided into half frames of 5 ms, and each half frame includes 5 subframes. In the case of a subcarrier spacing of 15 kHz, one subframe includes one slot, and each slot includes 14 OFDM symbols. FIG. 2 is a view for explaining a frame structure in an NR system to which the present embodiment may be applied.

Referring to FIG. 2, a slot includes 14 OFDM symbols, which are fixed, in the case of a normal CP, but the length of the slot in the time domain may be varied depending on subcarrier spacing. For example, in the case of a numerology having a subcarrier spacing of 15 kHz, the slot is configured to have the same length of 1 ms as that of the subframe. On the other hand, in the case of a numerology having a subcarrier spacing of 30 kHz, the slot includes 14 OFDM symbols, but one subframe may include two slots each having a length of 0.5 ms. That is, the subframe and the frame may be defined using a fixed time length, and the slot may be defined as the number of symbols such that the time length thereof is varied depending on the subcarrier spacing

NR defines a basic unit of scheduling as a slot and also introduces a minislot (or a subslot or a non-slot-based schedule) in order to reduce a transmission delay of a radio section. If wide subcarrier spacing is used, the length of one slot is shortened in inverse proportion thereto, thereby reducing a transmission delay in the radio section. A minislot (or subslot) is intended to efficiently support URLLC scenarios, and the minislot may be scheduled in 2, 4, or 7 symbol units.

In addition, unlike LTE, NR defines uplink and downlink resource allocation as a symbol level in one slot. In order to reduce a HARQ delay, the slot structure capable of directly transmitting HARQ ACK/NACK in a transmission slot has been defined. Such a slot structure is referred to as a "self-contained structure", which will be described.

NR was designed to support a total of 256 slot formats, and 62 slot formats thereof are used in 3GPP Rel-15. In addition, NR supports a common frame structure constituting an FDD or TDD frame through combinations of various slots. For example, NR supports i) a slot structure in which all symbols of a slot are configured for a downlink, ii) a slot structure in which all symbols are configured for an uplink, and iii) a slot structure in which downlink symbols and uplink symbols are mixed. In addition, NR supports data transmission that is scheduled to be distributed to one or more slots. Accordingly, the base station may inform the LTE of whether the slot is a downlink slot, an uplink slot, or a flexible slot using a slot format indicator (SFI). The base station may inform a slot format by instructing, using the SFI, the index of a table configured through UE-specific RRC signaling. Further, the base station may dynamically instruct the slot format through downlink control information (DCI) or may statically or quasi-statically instruct the same through RRC signaling.

### <Physical Resources of NR>

With regard to physical resources in NR, antenna ports, resource grids, resource elements, resource blocks, bandwidth parts, and the like are taken into consideration.

The antenna port is defined to infer a channel carrying a symbol on an antenna port from the other channel carrying another symbol on the same antenna port. If large-scale properties of a channel carrying a symbol on an antenna port can be inferred from the other channel carrying a symbol on another antenna port, the two antenna ports may have a quasi-co-located or quasi-co-location (QC/QCL) relationship. The large-scale properties include at least one of delay spread, Doppler spread, a frequency shift, an average received power, and a received timing.

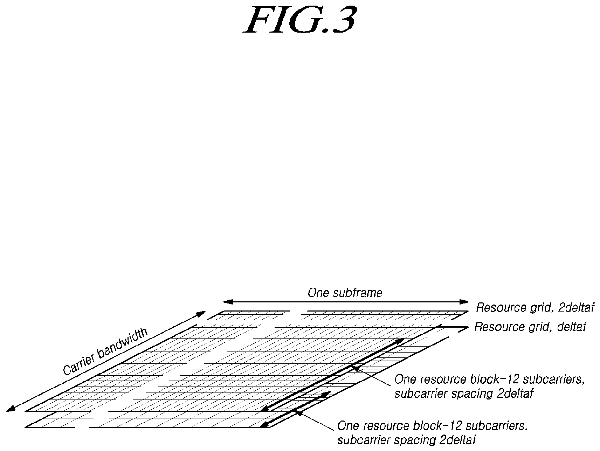

FIG. 3 illustrates resource grids supported by a radio access technology in accordance with embodiments of the present disclosure.

Referring to FIG. 3, resource grids may exist according to respective numerologies because NR supports a plurality of numerologies in the same carrier. In addition, the resource grids may exist depending on antenna ports, subcarrier spacing, and transmission directions.

A resource block includes 12 subcarriers and is defined only in the frequency domain. In addition, a resource element includes one OFDM symbol and one subcarrier. Therefore, as shown in FIG. 3, the size of one resource block may be varied according to the subcarrier spacing. Further, "Point A" that acts as a common reference point for the resource block grids, a common resource block, and a virtual resource block are defined in NR.

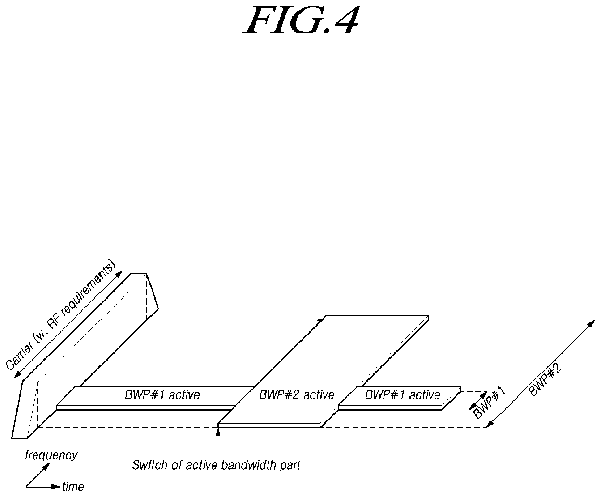

FIG. 4 illustrates bandwidth parts supported by a radio access technology in accordance with embodiments of the present disclosure.

Unlike LTE in which the carrier bandwidth is fixed to 20 MHz, the maximum carrier bandwidth is configured as 50 MHz to 400 MHz depending on the subcarrier spacing in NR. Therefore, it is not assumed that all UEs use the entire carrier bandwidth. Accordingly, as shown in FIG. 4, bandwidth parts (BWPs) may be specified within the carrier bandwidth in NR so that the UE may use the same. In addition, the bandwidth part may be associated with one numerology, may include a subset of consecutive common resource blocks, and may be activated dynamically over time. The UE has up to four bandwidth parts in each of the uplink and the downlink. The UE transmits and receives data using an activated bandwidth part during a given time.

In the case of a paired spectrum, uplink and downlink bandwidth parts are configured independently. In the case of an unpaired spectrum, in order to prevent unnecessary frequency re-tuning between a downlink operation and an uplink operation, the downlink bandwidth part and the uplink bandwidth part are configured in pairs to share a center frequency.

### <Initial Access in NR>

In NR, a UE performs a cell search and a random access procedure in order to access and communicates with a base station.

The cell search is a procedure of the LTE for synchronizing with a cell of a corresponding base station using a synchronization signal block (SSB) transmitted from the base station and acquiring a physical-layer cell ID and system information.

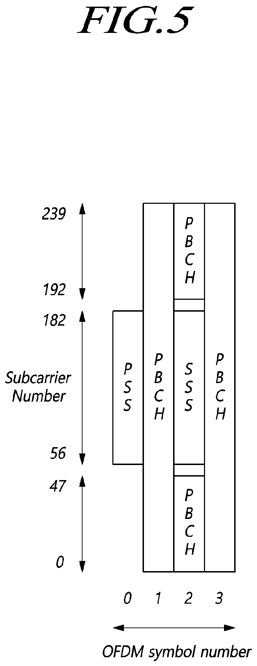

FIG. 5 illustrates an example of a synchronization signal block in a radio access technology in accordance with embodiments of the present disclosure.

Referring to FIG. 5, the SSB includes a primary synchronization signal (PSS) and a secondary synchronization signal (SSS), which occupy one symbol and 127 subcarriers, and PBCHs spanning three OFDM symbols and 240 subcarriers.

The UE monitors the SSB in the time and frequency domain, thereby receiving the SSB.

The SSB may be transmitted up to 64 times for 5 ms. A plurality of SSBs are transmitted by different transmission beams within a time of 5 ms, and the UE performs detection on the assumption that the SSB is transmitted every 20 ms based on a specific beam used for transmission. The number of beams that may be used for SSB transmission within 5 ms may be increased as the frequency band is increased. For example, up to 4 SSB beams may be transmitted at a frequency band of 3 GHz or less, and up to 8 SSB beams may be transmitted at a frequency band of 3 to 6 GHz. In addition, the SSBs may be transmitted using up to 64 different beams at a frequency band of 6 GHz or more.

One slot includes two SSBs, and a start symbol and the number of repetitions in the slot are determined according to subcarrier spacing as follows.

Unlike the SS in the typical LTE system, the SSB is not transmitted at the center frequency of a carrier bandwidth. That is, the SSB may also be transmitted at the frequency other than the center of the system band, and a plurality of SSBs may be transmitted in the frequency domain in the case of supporting a broadband operation. Accordingly, the UE monitors the SSB using a synchronization raster, which is a candidate frequency position for monitoring the SSB. A carrier raster and a synchronization raster, which are the center frequency position information of the channel for the initial connection, were newly defined in NR, and the synchronization raster may support a fast SSB search of the LTE because the frequency spacing thereof is configured to be wider than that of the carrier raster.

The UE may acquire an MIB over the PBCH of the SSB. The MIB (master information block) includes minimum information for the UE to receive remaining minimum system information (RMSI) broadcast by the network. In addition, the PBCH may include information on the position of the first DM-RS symbol in the time domain, information for the LTE to monitor SIB1 (e.g., SIB1 numerology information, information related to SIB1 CORESET, search space information, PDCCH-related parameter information, etc.), offset information between the common resource block and the SSB (the position of an absolute SSB in the carrier is transmitted via SIB1), and the like. The SIB 1 numerology information is also applied to some messages used in the random access procedure for the UE to access the base station after completing the cell search procedure. For example, the numerology information of SIB 1 may be applied to at least one of the messages 1 to 4 for the random access procedure.

The above-mentioned RMSI may mean SIB1 (system information block 1), and SIB1 is broadcast periodically (e.g., 160 ms) in the cell. SIB1 includes information necessary for the UE to perform the initial random access procedure, and SIB 1 is periodically transmitted over a PDSCH. In order to receive SIB 1, the UE must receive numerology information used for the SIB1 transmission and the CORESET (control resource set) information used for scheduling of SIB 1 over a PBCH. The UE identifies scheduling information for SIB1 using SI-RNTI in the CORESET. The UE acquires SIB1 on the PDSCH according to scheduling information. The remaining SIBs other than SIB1 may be periodically transmitted, or the remaining SIBs may be transmitted according to the request of the UE.

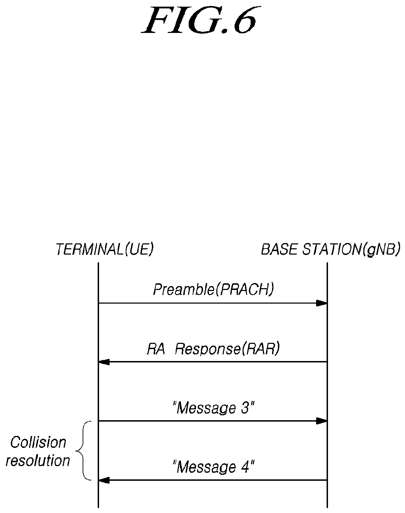

FIG. 6 is a view for explaining a random access procedure in a radio access technology to which the present embodiment is applicable.

Referring to FIG. 6, if a cell search is completed, the LTE transmits a random access preamble for random access to the base station. The random access preamble is transmitted over a PRACH. Specifically, the random access preamble is periodically transmitted to the base station over the PRACH that includes consecutive radio resources in a specific slot repeated. In general, a contention-based random access procedure is performed when the LTE makes initial access to a cell, and a non-contention-based random access procedure is performed when the UE performs random access for beam failure recovery (BFR).

The UE receives a random access response to the transmitted random access preamble. The random access response may include a random access preamble identifier (ID), LTL Grant (uplink radio resource), a temporary C-RNTI (temporary cell-radio network temporary identifier), and a TAC (time alignment command). Since one random access response may include random access response information for one or more UEs, the random access preamble identifier may be included in order to indicate the UE for which the included UL Grant, temporary C-RNTI, and TAC are valid. The random access preamble identifier may be an identifier of the random access preamble received by the base station. The TAC may be included as information for the UE to adjust uplink synchronization. The random access response may be indicated by a random access identifier on the PDCCH, i.e., a random access-radio network temporary identifier (RA-RNTI).

Upon receiving a valid random access response, the LTE processes information included in the random access response and performs scheduled transmission to the base station. For example, the LTE applies the TAC and stores the temporary C-RNTI. In addition, the LTE transmits, to the base station, data stored in the buffer of the LTE or newly generated data using the UL Grant. In this case, information for identifying the UE must be included in the data.

Lastly, the LTE receives a downlink message to resolve the contention.

### <NR CORESET>

The downlink control channel in NR is transmitted in a CORESET (control resource set) having a length of 1 to 3 symbols, and the downlink control channel transmits uplink/downlink scheduling information, an SFI (slot format index), TPC (transmit power control) information, and the like.

As described above, NR has introduced the concept of CORESET in order to secure the flexibility of a system. The CORESET (control resource set) refers to a time-frequency resource for a downlink control signal. The LTE may decode a control channel candidate using one or more search spaces in the CORESET time-frequency resource. CORESET-specific QCL (quasi-colocation) assumption is configured and is used for the purpose of providing information on the characteristics of analogue beam directions, as well as delay spread, Doppler spread, Doppler shift, and an average delay, which are the characteristics assumed by existing QCL.

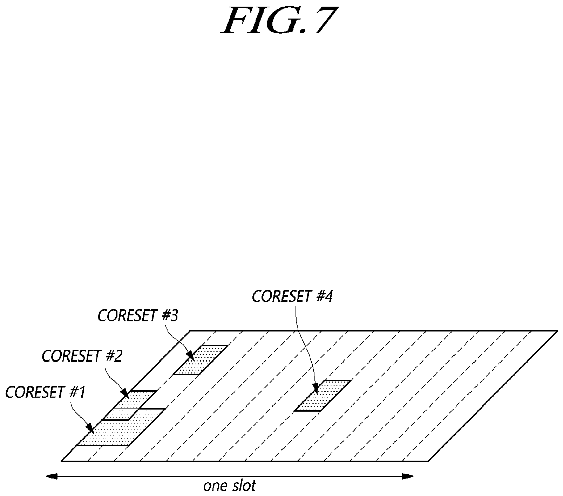

FIG. 7 illustrates CORESET.

Referring to FIG. 7, CORESETs may exist in various forms within a carrier bandwidth in a single slot, and the CORESET may include a maximum of 3 OFDM symbols in the time domain. In addition, the CORESET is defined as a multiple of six resource blocks up to the carrier bandwidth in the frequency domain.

A first CORESET, as a portion of the initial bandwidth part, is designated (e.g., instructed, assigned) through an MIB in order to receive additional configuration information and system information from a network. After establishing a connection with the base station, the LTE may receive and configure one or more pieces of CORESET information through RRC signaling.

In this specification, a frequency, a frame, a subframe, a resource, a resource block, a region, a band, a subband, a control channel, a data channel, a synchronization signal, various reference signals, various signals, or various messages in relation to NR (New Radio) may be interpreted as meanings used at present or in the past or as various meanings to be used in the future.

### NR(New Radio)

The NR is required to be designed not only to provide an improved data transmission rate but also to meet various QoS requirements for each detailed and specific usage scenario, compared to the LTE/LTE-Advanced. In particular, an enhanced mobile broadband (eMBB), massive machine-type communication (mMTC), and ultra reliable and low latency communication (URLLC) are defined as representative usage scenarios of the NR. In order to meet requirements for each usage scenario, it is required to design the NR to have a more flexible frame structure as compared to the LTE/LTE-Advanced.

Since each usage scenario imposes different requirements for data rates, latency, coverage, etc., there arises a need for a method of efficiently multiplexing numerology-based (e.g., a subcarrier spacing (SCS), a subframe, a transmission time interval (TTI), etc.) radio resource units different from each other, as a solution for efficiently satisfying requirements according to usage scenarios over a frequency band provided to an NR system.

To this end, there have been discussions on i) methods of multiplexing numerologies having subcarrier spacing (SCS) values different from one another based on TDM, FDM or TDM/FDM over one NR carrier, and ii) methods of supporting one or more time units in configuring a scheduling unit in the time domain. In this regard, in the NR, a definition of a subframe has been given as one type of a time domain structure. In addition, as a reference numerology to define a corresponding subframe duration, a single subframe duration is defined as having 14 OFDM symbols of normal CP overhead based on 15 kHz subcarrier spacing (SCS), like the LTE. Therefore, the subframe of the NR has the time duration of 1 ms.

Unlike the LTE, since the subframe of the NR is an absolute reference time duration, a slot and a mini-slot may be defined as a time unit for actual LTL/DL data scheduling. In this case, the number of OFDM symbols which constitutes a slot, a value of y, has been defined as y = 14 regardless of the numerology.

Therefore, a slot may be made up of 14 symbols. In accordance with a transmission direction for a corresponding slot, all symbols may be used for DL transmission or LTL transmission, or the symbols may be used in the configuration of a DL portion + a gap + a UL portion.

Further, a mini-slot has been defined to be made up of fewer symbols than the slot in a numerology (or SCS), and as a result, a short time domain scheduling interval may be configured for UL/DL data transmission or reception based on the mini-slot. Also, a long time domain scheduling interval may be configured for the UL/DL data transmission or reception by slot aggregation.

Particularly, in the case of the transmission or reception of latency critical data, such as the URLLC, when scheduling is performed on a slot basis based on 1 ms (14 symbols) defined in a frame structure based on a numerology having a small SCS value, for example, 15 kHz, latency requirements may be difficult to be satisfied. To this end, a mini-slot made up of fewer OFDM symbols than the slot may be defined, and thus the scheduling for the latency critical data, such as the URLLC, may be performed based on the mini-slot.

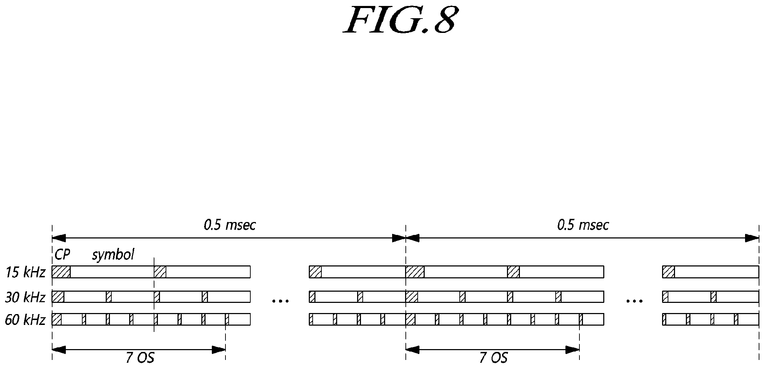

As described above, it is also contemplated to schedule the data according to the latency requirement based on the length of the slot (or minislot) defined by the numerology by supporting the numerology with the different SCS values in one NR carrier by multiplexing them in the TDM and/or FDM manner. For example, as shown in FIG. 8, when the SCS is 60 kHz, the symbol length is reduced to about 1/4 of that of the SCS 15 kHz. Therefore, when one slot is made up of 14 OFDM symbols, the slot length based on 15 kHz is 1 ms whereas the slot length based on 60 kHz is reduced to about 0.25 ms.

Thus, since different SCSs or different TTI lengths from one another are defined in the NR, technologies have been developed for satisfying requirements of each of the URLLC and the eMBB.

### <Bandwidth part; BWP >

The typical LTE system supports scalable bandwidth operations for any LTE CC (component carrier). That is, according to a frequency deployment scenario, an LTE provider may configure a bandwidth of a minimum of 1.4 MHz to a maximum of 20 MHz in configuring a single LTE CC, and a normal LTE LTE supports a transmission/reception capability of a bandwidth of 20 MHz for a single LTE CC.

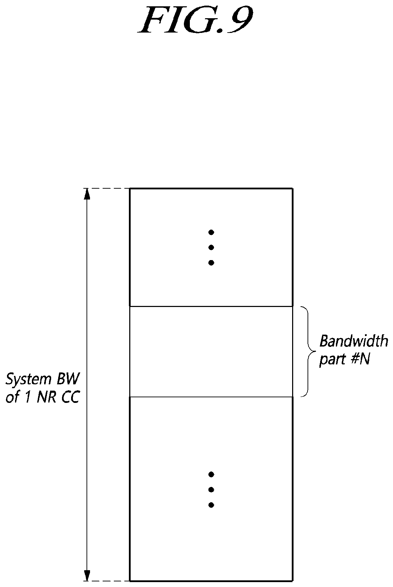

However, the NR is designed to support the UE of NR having different transmission/reception bandwidth capabilities over a single wideband NR CC. Accordingly, it is required to configure one or more bandwidth parts (BWPs) including subdivided bandwidths for an NR CC as shown FIG. 9, thereby supporting a flexible and wider bandwidth operation through configuration and activation of different bandwidth parts for respective UEs.

Specifically, one or more bandwidth parts may be configured through a single serving cell configured for a UE in NR, and the LTE is defined to activate one downlink (DL) bandwidth part and one uplink (LTL) bandwidth part to use the same for uplink/downlink data transmission/reception in the corresponding serving cell. In addition, in the case where a plurality of serving cells is configured for the UE (i.e., the LTE to which CA is applied), the LTE is also defined to activate one downlink bandwidth part and/or one uplink bandwidth part in each serving cell to use the same for uplink/downlink data transmission/reception by utilizing radio resources of the corresponding serving cell.

Specifically, an initial bandwidth part for an initial access procedure of a LTE may be defined in a serving cell; one or more UE-specific bandwidth parts may be configured for each UE through dedicated RRC signaling, and a default bandwidth part for a fallback operation may be defined for each UE.

It is possible to define simultaneously activating and using a plurality of downlink and/or uplink bandwidth parts according to the capability of the UE and the configuration of the bandwidth parts in a serving cell. However, NR rel-15 defined activating and using only one downlink (DL) bandwidth part and one uplink (UL) bandwidth part at a time.

### Wider bandwidth operations

The typical LTE system supports scalable bandwidth operations for any LTE CC (component carrier). That is, according to a frequency deployment scenario, an LTE provider may configure a bandwidth of a minimum of 1.4 MHz to a maximum of 20 MHz in configuring a single LTE CC, and a normal LTE LTE supports a transmission/reception capability of a bandwidth of 20 MHz for a single LTE CC.

However, NR is designed to support the UE of NR having different transmission/reception bandwidth capabilities over a single wideband NR CC. Accordingly, it is required to configure one or more bandwidth parts (BWPs) including subdivided bandwidths for an NR CC as shown FIG. 9, thereby supporting a flexible and wider bandwidth operation through configuration and activation of different bandwidth parts for respective UEs.

Specifically, one or more bandwidth parts may be configured through a single serving cell configured for a UE in NR, and the LTE is defined to activate one downlink (DL) bandwidth part and one uplink (LTL) bandwidth part to use the same for uplink/downlink data transmission/reception in the corresponding serving cell. In addition, in the case where a plurality of serving cells is configured for the UE (i.e., the LTE to which CA is applied), the LTE is also defined to activate one downlink bandwidth part and/or one uplink bandwidth part in each serving cell to use the same for uplink/downlink data transmission/reception by utilizing radio resources of the corresponding serving cell.

Specifically, an initial bandwidth part for an initial access procedure of a LTE may be defined in a serving cell; one or more UE-specific bandwidth parts may be configured for each UE through dedicated RRC signaling, and a default bandwidth part for a fallback operation may be defined for each UE.

It is possible to define simultaneously activating and using a plurality of downlink and/or uplink bandwidth parts according to the capability of the UE and the configuration of the bandwidth parts in a serving cell. However, NR rel-15 defined activating and using only one downlink (DL) bandwidth part and one uplink (UL) bandwidth part at a time.

Hereinafter, a method of relaying a radio signal in a wireless network will be described in detail with reference to related drawings.

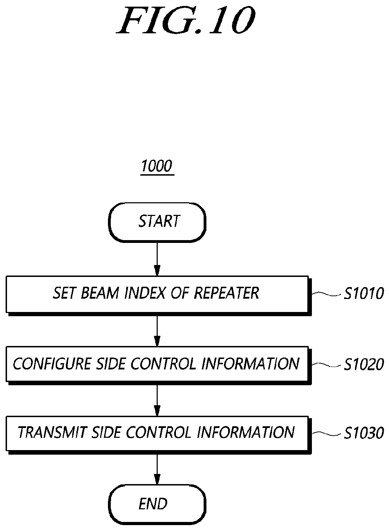

FIG. 10 is a diagram illustrating a procedure 100 of a base station for controlling relay of a radio signal according to an embodiment.

Referring to FIG. 10, the base station may set a beam index for a beam of a repeater used for communication between a repeater and a terminal (S1010).

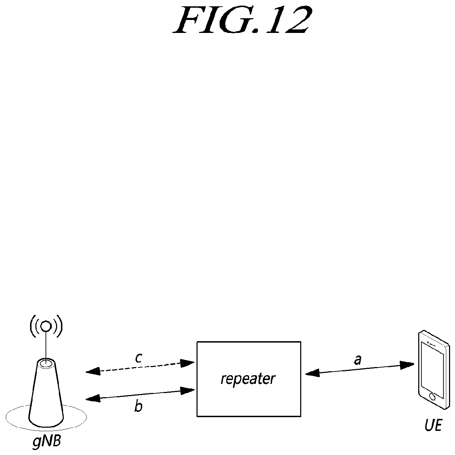

The repeater performs an operation of receiving, amplifying, and forwarding a signal of the base station or a signal of the terminal. Referring to FIG. 12, the repeater performs an operation of amplifying and forwarding a radio signal between the base station and the terminal through links a and b. In addition, a link c may be further configured between the base station and the repeater for control of the repeater. According to an embodiment, the link a may be referred to as an access link, the link b may be referred to as a backhaul link, and the link c may be referred to as a control link, but the embodiments are not limited thereto.

The base station may acquire information on the number of DL Tx beams and uplink reception beams (LTL Rx beams) supported by the repeater. According to an embodiment, the information on the number of beams supported by the repeater may be acquired from the repeater through repeater capability signaling. Alternatively, the information on the number of beams may be preset for each repeater and stored in the base station.

The base station may set beam indexes for each DL Tx beam or UL Rx beam according to the number of beams supported by the repeater. For example, when N DL Tx beams are supported by the repeater, the base station may set beam indexes to 0, 1, 2, ..., N-1 for each beam. Similarly, when the repeater supports M downlink reception beams, the base station may set beam indexes to 0, 1, 2, ..., M-1 for each beam. When the UL Rx beams are paired with the DL Tx beams, M is the same number as N, and beam indexes to 0, 1, 2, ..., N-1 corresponding to paired DL Tx beams may be set for the UL Rx beams.

According to an embodiment, the DL Tx beams supported by the repeater may be divided and set according to a cast type. For example, the DL Tx beams may be divided into a type 1 for broadcast, a type 2 for multicast/groupcast, and a type 3 for unicast. Alternatively, the DL Tx beams may be divided into a type 1 for broadcast/multicast/groupcast and a type 2 for unicast. In this case, the base station may set beam indexes for each type. For example, the beam indexes of 0, 1, 2, ..., N-1 may be set in the order of type 1, type 2, and type 3. Alternatively, a separate beam index may be set from 0 for each type. In this case, both the type information and beam index information may be used in the indication for each beam.

Alternatively, according to an embodiment, DL Tx beams and UL Rx beams may be divided according to a beam width type. For example, when secondary sweeping is performed with a narrow beam within a wide beam determined by performing primary sweeping with a wide beam, the base station may set the beam indexes for each of the wide beam and the narrow beam. In this case, both the beam width type information and the beam index information may be used in the indication for each beam.

Referring back to FIG. 10, the base station may configure side control information for the beam control of the repeater based on the beam index (S 1020) and transmit the side control information to the repeater (S 1030).

The base station may transmit side control information for a DL Tx beam or a LTL Rx beam for the repeater to the repeater through the link c. That is, information on beams to be used by the repeater for signal relay between the base station and the terminal may be indicated (e.g., provided, informed) through the side control information.

The side control information may include beam indication information divided into semi-static beam indication information and dynamic beam indication information. In this case, according to an embodiment, a set of dynamic beams and a set of semi-static beams supported by the repeater may be divided, configured, and indicated by respective beam indication information.

According to an embodiment, the type of beams according to the above-described cast type may be applied to the set of dynamic beams and the set of semi-static beams. For example, the set of semi-static beams may be applied to the above-described type 1 beams for broadcast/multicast/groupcast, and the set of dynamic beams may be applied to type 2 beams for unicast.

However, this is only an example, and the embodiments are not limited thereto. According to another embodiment, all the DL Tx beams and the UL Rx beams supported by the repeater may be targets of the semi-static beam indication information and the dynamic beam indication information, respectively, without separate distinction.

According to an embodiment, in the case of the dynamic beam indication information, the base station may configure the information indicating the DL Tx beam or the LTL Rx beam to be used by the repeater and transmit the configured information through downlink control information (DCI). Along with the beam indication information, time resources to be used may also be determined from among a plurality of preconfigured time resources through higher layer signaling and transmitted through the DCI. In this case, according to an embodiment, the beam indication information and the time resource allocation information may be indicated as different field values within the same DCI.

According to an embodiment, the semi-static beam indication information may be divided into periodic beam indication information and semi-persistent beam indication information. The base station may transmit the periodic beam indication information or the semi-persistent beam indication information to the repeater through the higher layer signaling such as the radio resource control (RRC) signaling. In this case, the semi-static beam indication information may include beam index indication information and time resource allocation information.

The time resource allocation information may include period information, offset information, and duration information. That is, along with the period information in which the DL Tx beam or the UL Rx beam is used, duration information that may be defined as a start slot within one period, offset information for indicating a start symbol within a slot, and the number of symbols may be included in the time resource allocation information.

The repeater may transmit data to and receive data from the terminal based on the dynamic beam indication information or the semi-static beam indication information received from the base station. That is, the repeater may transmit the signal of the base station to the terminal using the DL Tx beam indicated by the base station. Similarly, the signal of the terminal may be received using the UL Rx beam indicated by the base station.

According to an embodiment, it is assumed that a plurality of types of beam indication information collide in the same time interval. In the case the same types of beam indication information collides, for example, in the case between periodic beam indication information collides with another periodic beam indication information or between semi-persistent beam indication information collides with another semi-persistent beam indication information, the period information may be configured differently for preventing the collision. When the collision occurs between the dynamic beam indication information with another dynamic beam indication information, the last dynamic beam indication information may be configured (e.g., determined) as valid.

When the semi-static beam indication information and the dynamic beam indication information collide in a predetermined time interval, it is necessary to prioritize the beam indication information. For example, the dynamic beam control information may be configured to have a higher priority than the semi-static beam control information. That is, when the same beam is dynamically indicated in the time interval in which the semi-static beam indication information is set, the dynamic beam indication information may be configured to have a higher priority than the semi-static beam indication information.

In addition, when the periodic beam control information and the semi-persistent beam control information in the semi-static beam control information collide in a predetermined time interval, the semi-persistent beam control information may be configured to have a higher priority than the periodic beam control information. When different beam indication information collides in the same time interval, the repeater may transmit and receive the corresponding signal using the preferred beam according to the above-described priority.

As a result, by controlling the beam information used for the data transmission and reception between the repeater and the terminal, the optimal beam is used in consideration of various situations such as whether the terminal is connected, a location, and a channel condition, and it is possible to provide the method and apparatus capable of improving the coverage and data transmission/reception performance of the repeater.

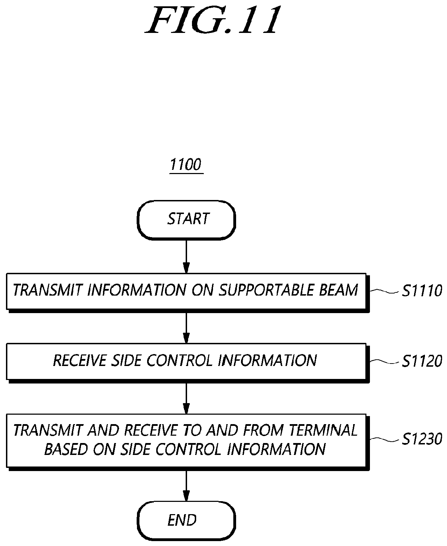

FIG. 11 is a flowchart illustrating a procedure 1100 of a repeater for controlling relay of a radio signal according to an embodiment. Some description of FIG. 11 may be omitted to avoid redundant description. In this case, the omitted content may be substantially equally applied to a transmitting terminal as long as it does not contradict the technical spirit of the present invention.

Referring to FIG. 11, the repeater may transmit the information on the beam of the repeater that may support the communication between the repeater and the terminal (S1110).

According to an embodiment, the repeater may transmit the information on the number of supported beams to the base station through repeater capability signaling. However, this is an example, and the information on the number of beams may be preset for each repeater and stored in the base station. In this case, operation S1110 may be omitted.

Referring back to FIG. 11, the repeater may receive the side control information for the beam control of the repeater configured based on the beam index of the beam of the repeater (S 1120).

As described above, the base station may set beam indexes for each DL Tx beam or UL Rx beam according to the number of beams supported by the repeater. For example, when N DL Tx beams are supported by the repeater, the base station may set beam indexes to 0, 1, 2, ..., N-1 for each beam. Similarly, when M downlink reception beams are supported by the repeater, the base station may set beam indexes to 0, 1, 2, ..., M-1 for each beam. When the UL Rx beams are paired with the DL Tx beams, M is the same number as N, and beam indexes to 0, 1, 2, ..., N-1 corresponding to paired DL Tx beams may be set for the UL Rx beams.

According to an embodiment, the DL Tx beams supported by the repeater may be divided and set according to a cast type. For example, the DL Tx beams may be classified into a type 1 for broadcast, a type 2 for multicast/groupcast, and a type 3 for unicast. Alternatively, the DL Tx beams may be classified into a type 1 for broadcast/multicast/groupcast and a type 2 for unicast. In this case, the base station may set beam indexes for each type. For example, the beam indexes of 0, 1, 2, ..., N-1 may be set in the order of the type 1, the type 2, and the type 3. Alternatively, a separate beam index may be set from 0 for each type. In this case, both the type information and the beam index information may be used in the indication for each beam.

According to an embodiment, DL Tx beams and UL Rx beams may be divided according to a beam width type. For example, when secondary sweeping is performed with a narrow beam within a wide beam determined by performing primary sweeping with a wide beam, the base station may set the beam indexes for each of the wide beam and the narrow beam. In this case, both the beam width type information and the beam index information may be used in the indication for each beam.

The repeater may receive the side control information for the beam control of the repeater configured by the base station based on the beam index. The repeater may receive the side control information for the DL Tx beam or the UL Rx beam from the base station through the link c. That is, information on beams to be used by the repeater for signal relay between the base station and the terminal may be indicated through the side control information.

The side control information may include beam indication information divided into semi-static beam indication information and dynamic beam indication information. In this case, according to an embodiment, the set of dynamic beams and the set of semi-static beams supported by the repeater may be divided, configured, and indicated by respective beam indication information.

According to an embodiment, the type of beams according to the above-described cast type may be applied to the set of dynamic beams and the set of semi-static beams. For example, the set of semi-static beams may be applied to the above-described type 1 beams for broadcast/multicast/groupcast, and the set of dynamic beams may be applied to type 2 beams for unicast.

However, this is only an example that is not limiting. According to another example, all the DL Tx beams and the UL Rx beams supported by the repeater may be targets of the semi-static beam indication information and the dynamic beam indication information, respectively, without separate distinction.

According to an embodiment, in the case of the dynamic beam indication information, the repeater may configure the information indicating the DL Tx beam or the UL Rx beam to be used by the repeater and receive the configured information from the base station through the DCI. Along with the beam indication information, time resources to be used may also be determined from among a plurality of preconfigured time resources through higher layer signaling and transmitted through the DCI. In this case, according to an example, the beam indication information and the time resource allocation information may be indicated as different field values within the same DCI.

According to an embodiment, the semi-static beam indication information may be divided into periodic beam indication information and semi-persistent beam indication information. The repeater may receive the periodic beam indication information or the semi-persistent beam indication information from the base station through the higher layer signaling such as the RRC signaling. In this case, the semi-static beam indication information may include beam index indication information and time resource allocation information.

The time resource allocation information may include period information, offset information, and duration information. That is, along with the period information in which the DL Tx beam or the UL Rx beam is used, duration information that may be defined as a start slot within one period, offset information for indicating a start symbol within a slot, and the number of symbols may be included in the time resource allocation information.

According to an embodiment, it is assumed that a plurality of types of beam indication information may collide in the same time interval. In the case the same types of beam indication information collide, for example, in the case periodic beam indication information collides with another periodic beam indication information or semi-persistent beam indication information collides with another semi-persistent beam indication information, the period information may be configured differently for preventing collision. When the collision occurs between the same types of dynamic beam indication information, the last dynamic beam indication information may be configured (e.g., determined) as valid.

When the semi-static beam indication information and the dynamic beam indication information collide in a predetermined time interval, it is necessary to prioritize the beam indication information. For example, the dynamic beam control information may be configured to have a higher priority than the semi-static beam control information. That is, when the same beam is dynamically indicated in the time interval in which the semi-static beam indication information is set, the dynamic beam indication information may be configured to have a higher priority than the semi-static beam indication information.

In addition, when the periodic beam control information and the semi-persistent beam control information in the semi-static beam control information collide in a predetermined time interval, the semi-persistent beam control information may be configured to have a higher priority than the periodic beam control information.

Referring back to FIG. 11, the repeater may transmit data to and receive data from the terminal based on the side control information (S1130).

The repeater may transmit data to and receive from the terminal based on the dynamic beam indication information or the semi-static beam indication information received from the base station. That is, the repeater may transmit the signal of the base station to the terminal using the DL Tx beam indicated by the base station. Similarly, the signal of the terminal may be received using the UL Rx beam indicated by the base station.

In addition, when different types of beam indication information collide in the same time interval, the repeater may transmit and receive the corresponding signal using the preferred beam according to the above-described priority.

As a result, by controlling the beam information used for the data transmission and reception between the repeater and the terminal, the optimal beam is used in consideration of various situations such as whether the terminal is connected, a location, and a channel condition, and it is possible to provide the method and apparatus capable of improving the coverage and data transmission/reception performance of the repeater.

Hereinafter, embodiments related to the method of relaying a radio signal in a wireless network will be described in detail with reference to related drawings.

The present disclosure provides a method of a base station for controlling a repeater in a wireless mobile communication system. In particular, the present disclosure introduces a method of a base station for controlling a DL Tx beam and a LTL Rx beam of a repeater and a method of operating a repeater accordingly.

The present disclosure introduces a method of controlling a repeater based on NR which is defined as 5G technology in 3GPP. However, the technical idea introduced in the present disclosure is not limited thereto. For example, the technical idea introduced in the present disclosure may be applied to another mobile communication systems such as LTE and 6G to be developed in the future. In addition, the corresponding repeater may include a new passive/active type of reflecting surface such as a new metamaterial-based intelligent reflecting surface (IRS) or reconfigurable intelligent surface (RIS) in addition to the typical RF repeater and optical repeater. The technical idea proposed in the present disclosure may be applied to the corresponding IRS/RIS control method.

According to the typical repeater operation for wireless coverage expansion, the repeater is an amplify & forward type that receives a signal of the base station or a signal of the terminal and then simply amplifies and forwards the signal. Accordingly, the repeater continuously receives, amplifies, and transmits the signal from the base station regardless of whether there is a terminal that actually needs help from the corresponding repeater. That is, a repeater in the cell configured by the base station unconditionally relays the signal of the base station corresponding to a donor node of the repeater without a process such as optimal repeater (analog) Tx beam optimization, based on whether the terminal within the coverage of the corresponding repeater is connected, the location/channel condition etc., of the connected terminal, etc.

Such operation may not only cause unnecessary energy consumption of the repeater, but also cause unnecessary interference to other terminals within the corresponding cell.

In addition, a hybrid beamforming method may be applied to a cell/base station operating in a high frequency band, such as frequency range 2 (FR2) of 5G. The hybrid beamforming method uses both analog beamforming technology and digital beamforming technology for expanding wireless coverage is applied. Accordingly, it is necessary to improve the coverage and data transmission and reception performance of the corresponding repeater by selecting and transmitting the optimal Tx beam based on the location, the channel condition, etc., of the terminal through the analog beamforming in the repeater.

The present disclosure introduces a method of a base station for controlling a Tx beam or an Rx beam of the corresponding repeater when one or more analog Tx beams or Rx beams are supported by a repeater. In particular, the present disclosure provides two types of beam indication methods, dynamic beam indication and semi-static (or periodic or semi-persistent) beam indication, for indicating a DL Tx beam or a LTL Rx beam of a repeater, and a method of operating a repeater accordingly.

In the present disclosure, for convenience of description, a C-link denotes a link between a base station and a repeater for control of the repeater. On the other hand, an F-link denotes a link between a repeater and a terminal for performing an original function of the repeater, that is, a function of amplifying a downlink signal of a base station and forwarding the amplified downlink signal to the terminal, and a function of amplifying an uplink signal of the terminal and forwarding the amplified uplink signal to the base station. Referring to FIG. 12, the C-link corresponds to a link c between the base station and the repeater, and the F-link corresponds to a link b between the base station and the repeater and a link a between the repeater and the terminal. However, the names of the links are examples, and the links are not limited by these names.

The base station may transmit control information for a Tx beam or an Rx beam for a repeater to the corresponding repeater through the C-link. In the present disclosure, the control information for the repeater of the corresponding base station is referred to as side control information (SCI).

The repeater may set the DL Tx beam for amplifying/transmitting the signal of the base station through the F-link or the UL Rx beam for receiving the uplink signal of the terminal based on the SCI received from the base station.

Hereinafter, a method of controlling a DL Tx beam or a LTL Rx beam for an F-link will be described. The technical idea introduced in the present disclosure may be used even when transmitting and receiving an original amplify & forward signal between the base station and the repeater through the C-link or F-link control for the SCI transmission.

According to an embodiment, the information on the number of DL Tx beams supported by the corresponding repeater is forwarded to the base station/network by a capability signaling or pre-configured method in a repeater. In this case, the beam indexing may be performed for each DL Tx beam according to the number of DL Tx beams supported by the repeater. That is, when a repeater supports N DL Tx beams, the beam indexes (or, beam ID) up to 0, 1, 2, ..., N-1 for each DL Tx beam supported by the corresponding repeater may be assigned.

However, for the DL Tx beams supported by a repeater, the DL Tx beams may be divided into one or more types according to a cast type and set. For example, three types of DL Tx beams, a type 1 DL Tx beam(s) for broadcast, a type 2 DL Tx beam(s) for multicast/groupcast and unicast, and a type 3 DL Tx beam(s) for unicast, may be set for a repeater. Alternatively, two types of DL Tx beams, a type 1 DL Tx beam(s) for broadcast/multicast/groupcast and a type 2 DL Tx beam(s) for unicast, may be set.

Similarly, a repeater may forward the information on the number of Rx beams supported by the corresponding repeater to the base station/network by the capability signaling or pre-configured method. In this case, the beam indexing is performed for each UL Rx beam according to the number of UL Rx beams supported by the repeater. That is, when a repeater supports N UL Rx beams, the beam indexes (or, beam ID) up to 0, 1, 2, ..., M-1 for each UL Rx beam supported by the corresponding repeater may be assigned. However, according to an embodiment, in the case of the UL Rx beams, the UL Rx beams may be defined by being paired with the DL Tx beam index (or beam ID) without being separately defined. That is, as described above, when N DL Tx beams are supported by a repeater, N UL Rx beams are also supported for the UL Rx accordingly, and thus the DL Tx beam index and the UL Rx beam index pair may be defined up to 0, 1, 2, ..., N-1.

The base station may transmit the control information for the Tx beam or the Rx beam for a repeater to the corresponding repeater. The DL Tx beam or LTL Rx beam of the corresponding repeater may be indicated by the base station through the SCI. In this case, the beam indication information indicating the beam of the corresponding repeater may be divided into the dynamic beam indication information and the semi-static (or periodic or semi-persistent) beam indication information.

A dynamic beam set and a semi-static beam set supported by a repeater may be configured separately. For example, a dynamic DL Tx beam set and a dynamic UL Rx beam set may be configured separately from a semi-static DL Tx beam set and a semi-static UL Rx beam set. To this end, the division of the DL Tx beam or UL Rx beam type supported by the repeater may be applied to the configuration of the DL or UL beam set targeted for the dynamic beam indication and the configuration of the DL or LTL beam set targeted for the semi-static beam indication. For example, according to the above cast type, the type 1 DL Tx beam or LTL Rx beam for broadcast and multicast/groupcast may be used as the semi-static beam set, and the type 2 DL Tx beam or UL Rx beam for unicast may be used as the dynamic beam set. Alternatively, when setting the repeater capability, the semi-static beam set and the dynamic DL Tx beam set are divided, and the configuration information of the dynamic DL Tx beam set and the semi-static DL Tx beam set and the dynamic UL Rx beam set and the semi-static UL Rx beam set supported by the repeater may be forwarded to the base station/network through the capability signaling or pre-configured.

Alternatively, without separate division between the dynamic beam set and the semi-static beam set, all the DL Tx beams and UL Rx beams supported by the repeater may be defined as the target beam set of the corresponding dynamic beam indication or semi-static beam indication.

### Dynamic beam indication information method

The dynamic beam indication is an event-triggered type beam indication form, and the base station may indicate beam information to be used by the corresponding repeater for the DL Tx or UL Rx in a specific time interval. To this end, the base station may indicate (e.g., provide, transmit) the corresponding dynamic beam indication information and the time interval allocation information through the SCI. In this case, the corresponding time interval indication information may be allocated time offset information, duration information, etc., in correspondence with each piece of beam indication information.

According to another embodiment, the dynamic beam indication may be performed as beam change indication information in units of SCI transmission periods. That is, it may be defined to perform the dynamic beam indication in units of SCI transmission periods for a repeater. As a result, it may be defined to indicate the DL Tx beam or the UL Rx beam to be used by the corresponding repeater until the next SCI transmission.

Specifically, when transmitting any SCI, it may be defined to determine the beam to be used during the DL Tx and the UL Rx from a symbol next to a last symbol in which the corresponding SCI transmission is performed to the last symbol in which the next SCI transmission is performed, according to the indicated DL Tx beam indication information or UL Rx beam indication information, in a corresponding repeater. Alternatively, the SCI processing time or maximum SCI processing time, T_{proc}, is defined in the repeater. Accordingly, it may be defined to determine the beam to be used during the DL TX and the LTL RX from a first symbol after the last symbol + T_{proc} in which the corresponding SCI transmission is performed to the last symbol belonging to the last symbol + T_{proc} in which the next SCI transmission is performed. Alternatively, it may be defined to determine the beam to be used during the DL Tx and the UL Rx from a first slot after the last symbol + T_{proc} in which the corresponding SCI transmission is performed to a last slot belonging to the last symbol + T_{proc} in which the next SCI transmission is performed.

Alternatively, it may be defined to determine the beam to be used during the DL Tx and the UL Rx from a slot next to the slot in which the SCI transmission is performed to a slot in which the next SCI transmission is performed. Alternatively, it may be defined to determine the beam to be used during the DL Tx and the UL Rx from a slot corresponding to a slot + n in which the SCI transmission is performed to a slot corresponding to a slot + n-1 in which the next SCI transmission is performed. In this case, the corresponding n value may be indicated by the base station/network through the SCI signaling, set through higher layer signaling, or pre-configured.

According to another embodiment, time granularity at which beam indication is performed through one SCI may be defined, and the DL Tx beam or UL Rx beam indication information may be defined to be transmitted for each time granularity. For example, the corresponding time granularity may be configured in units of slots or symbol groups, and time domain boundaries for M beam indications may be configured based on the given time granularity within any SCI transmission and reception period or monitoring period. In this case, one SCI may include the DL TX beam indication information or the UL Rx beam indication information for each time granularity. That is, one SCI may include M pieces of beam indication information. According to an embodiment, the time granularity may be configured asymmetrically in the time domain. For example, when two time granularities are configured in one slot, these time granularities may be configured in the form of (1 symbol, 13 symbols), (2 symbols, 12 symbols), or (3 symbols, 11 symbols), etc. Additionally, a single pattern may be pre-configured for time granularity configuration information for the corresponding beam indication. Alternatively, a plurality of patterns may be defined, and pattern information to be used in a repeater may be set or indicated to the corresponding repeater by the base station through the higher layer signaling or the SCI.

### Semi-static beam indication/setting method

The semi-static beam indication is a form of beam indication or setting that is repeated based on a certain period, and the semi-static beam indication may indicate or set the DL Tx beam to be used for the DL Tx or the UL Rx beam to be used for the UL Rx at a certain period in a corresponding repeater. To this end, the semi-static beam indication or setting for a repeater may be performed in a base station separately from the dynamic beam indication method through SCI. The corresponding semi-static beam indication or setting may be indicated (e.g., informed, instructed) through the SCI that includes the dynamic beam indication information and a separate SCI. Alternatively, the semi-static beam indication or setting is transmitted through one SCI with the dynamic beam indication information, but the semi-static beam indication or setting may be indicated by defining an information region for the dynamic beam indication and an information region for a separate semi-static beam indication or may be set through the higher layer signaling. However, like the dynamic beam indication information, when the semi-static beam indication information is transmitted through the SCI, the beam type indication information region for dividing whether the beam indication information transmitted through the corresponding SCI is the dynamic beam indication information or the semi-static beam indication information may be additionally defined and transmitted through corresponding SCI. Alternatively, an SCI format for the dynamic beam indication and a separate SCI format for the semi-static beam indication may be defined. The corresponding semi-static beam indication or setting information may include time interval allocation information for the DL Tx or the UL Rx based on the corresponding beam together with the DL Tx beam indication information or the UL Rx beam indication information. The corresponding time interval allocation information may include the period information, the time offset information, the duration information, etc.

Additionally, based on the above-described method or another method, the dynamic beam and the semi-static beam may be indicated or set for a repeater. In this case, the dynamic beam indication may overlap with the semi-static beam indication or setting in a specific time interval. In this case, it is necessary to define the Tx beam or the Rx beam to be used for the DL Tx or the UL Rx in a corresponding repeater. To this end, for example, the DL Tx beam or the UL Rx beam may be defined to give priority to the semi-static beam. That is, when the dynamic beam indication information overlaps with the semi-static beam indication information in the time domain in a repeater, the repeater may configure the DL Tx beam or the UL Rx beam by prioritizing the semi-static beam indication information.

On the other hand, the DL Tx beam or the UL Rx beam may be defined to give priority to the dynamic beam indication information. That is, when the dynamic beam indication information overlaps with the semi-static beam indication information in the time domain in a repeater, the repeater may configure the DL Tx beam or the UL Rx beam by prioritizing the semi-static beam indication information.

As a result, by controlling the beam information used for the data transmission and reception between the repeater and the terminal, the optimal beam is used in consideration of various situations such as whether the terminal is connected, a location, and a channel condition. Accordingly, it is possible to improve the coverage and data transmission/reception performance of the repeater in accordance with the embodiments.

Hereinafter, software and hardware configurations of the base station and the repeater capable of performing some or all of the present embodiments described with reference to FIGS. 1 to 12 will be described with reference to the drawings. Some description may be omitted to avoid redundant description. In this case, the omitted content may be substantially equally applied to the following description as long as it does not contradict the technical spirit of the present disclosure.

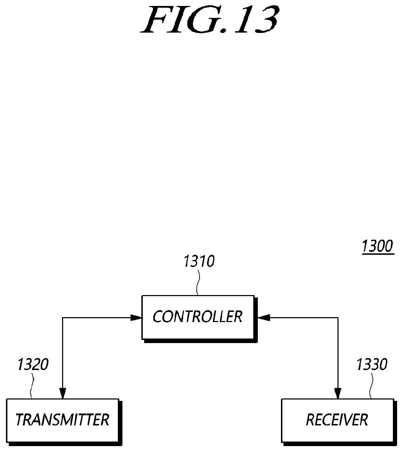

FIG. 13 is a block diagram illustrating a base station 1300 according to an embodiment of the present disclosure.

Referring to FIG. 13, the base station 1300 according to an embodiment includes a controller 1310, a transmitter 1320, and a receiver 1330.

The controller 1310 may be at least one processor connected to a memory, the transmitter 1320, and the receiver 1330. The controller 1310 may control an overall operation of the base station 1300 necessary to perform a method of relaying a radio signal in a wireless network necessary according to the embodiments described above.

The controller 1310 may set a beam index for a beam of a repeater used for communication between a repeater and a terminal.

The controller 1310 may acquire information on the number of DL Tx beams and UL Rx beams supported by the repeater. According to an embodiment, the information on the number of beams supported by the repeater may be acquired from the repeater through repeater capability signaling. Alternatively, the information on the number of beams may be preset for each repeater and stored in the base station.

The controller 1310 may set beam indexes for each DL Tx beam or LTL Rx beam according to the number of beams supported by the repeater.

According to an embodiment, the DL Tx beams supported by the repeater may be divided and set according to a cast type. For example, the DL Tx beams may be classified into a type 1 for broadcast, a type 2 for multicast/groupcast, and a type 3 for unicast. Alternatively, the DL Tx beams may be classified into a type 1 for broadcast/multicast/groupcast and a type 2 for unicast. In this case, the base station may set beam indexes for each type.

According to another embodiment, DL Tx beams and UL Rx beams may be divided according to a beam width type. For example, when secondary sweeping is performed with a narrow beam within a wide beam determined by performing primary sweeping with a wide beam, the controller 1310 may set the beam indexes for each of the wide beam and the narrow beam. In this case, both the beam width type information and the beam index information may be used in the indication for each beam.

The controller 1310 may configure the side control information for the beam control of the repeater based on the beam index (S1020) and transmit the side control information to the repeater. The controller 1310 may transmit side control information for a DL Tx beam or a LTL Rx beam for the repeater to the repeater through the link c. That is, information on beams to be used by the repeater for signal relay between the base station and the terminal may be indicated through the side control information.

The side control information may include beam indication information divided into semi-static beam indication information and dynamic beam indication information. According to an embodiment, the set of dynamic beams and the set of semi-static beams supported by the repeater may be divided, configured, and indicated by respective beam indication information.

According to an embodiment, the type of beams according to the above-described cast type may be applied to the set of dynamic beams and the set of semi-static beams. For example, the set of semi-static beams may be applied to the above-described type 1 beams for broadcast/multicast/groupcast, and the set of dynamic beams may be applied to the type 2 beams for unicast.

However, this is only an example. Embodiments are not limited thereto. According to another embodiments, all the DL Tx beams and the UL Rx beams supported by the repeater may be targets of the semi-static beam indication information and the dynamic beam indication information, respectively, without separate distinction.

According to an embodiment, in the case of the dynamic beam indication information, the controller 1310 may configure the information indicating the DL Tx beam or the UL Rx beam to be used by the repeater and transmit the configured information through downlink control information (DCI). Along with the beam indication information, time resources to be used may also be determined from among a plurality of preconfigured time resources through higher layer signaling and transmitted through the DCI. In this case, for example, the beam indication information and the time resource allocation information may be indicated as different field values within the same DCI.

According to an embodiment, the semi-static beam indication information may be divided into periodic beam indication information and semi-persistent beam indication information. The controller 1310 may transmit the periodic beam indication information or the semi-persistent beam indication information to the repeater through the higher layer signaling such as the RRC signaling. In this case, the semi-static beam indication information may include beam index indication information and time resource allocation information.

The time resource allocation information may include period information, offset information, and duration information. That is, along with the period information in which the DL Tx beam or the UL Rx beam is used, duration information that may be defined as a start slot within one period, offset information for indicating a start symbol within a slot, and the number of symbols may be included in the time resource allocation information.

According to an embodiment, when the semi-static beam indication information collides with (e.g., overlaps with) the dynamic beam indication information in a predetermined time interval, the dynamic beam control information may be configured to have a higher priority than the semi-static beam control information. That is, when the same beam is dynamically indicated in the time interval in which the semi-static beam indication information is set, the dynamic beam indication information may be configured to have a higher priority than the semi-static beam indication information.

In addition, when the periodic beam control information collides with (e.g., overlaps with) the semi-persistent beam control information in the semi-static beam control information a predetermined time interval, the semi-persistent beam control information may be configured to have a higher priority than the periodic beam control information.

The repeater may transmit and receive data to and from the terminal based on the dynamic beam indication information or the semi-static beam indication information received from the base station. That is, the repeater may transmit the signal of the base station to the terminal using the DL Tx beam indicated by the base station. Similarly, the signal of the terminal may be received using the UL Rx beam indicated by the base station.

In addition, when different types of beam indication information collides (e.g. overlaps) in the same time interval, the repeater may transmit and receive the corresponding signal using the preferred beam according to the above-described priority.

As a result, by controlling the beam information used for the data transmission and reception between the repeater and the terminal, the optimal beam is used in consideration of various situations such as whether the terminal is connected, a location, and a channel condition. Accordingly, it is possible to provide the method and apparatus capable of improving the coverage and data transmission/reception performance of the repeater in accordance with the embodiments.

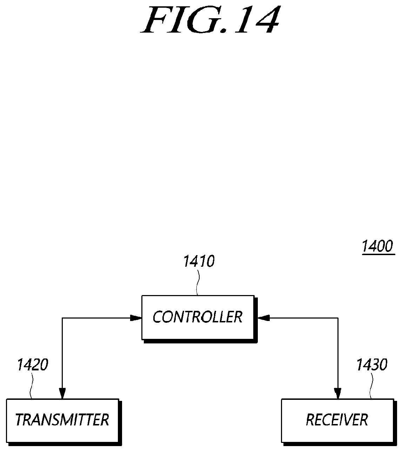

FIG. 14 is a block diagram illustrating a repeater 1400 according to an embodiment of the present disclosure.

Referring to FIG. 14, the repeater 1400 according to another embodiment includes a controller 1410, a transmitter 1420, and a receiver 1430.

The controller 1410 may be at least one processor connected to a memory the transmitter 1420, and the receiver 1430, and control an overall operation of the repeater 1400 necessary to perform a method of relaying a radio signal in a wireless network according to the embodiments described above. The transmitter 1420 may be a transmitting circuitry for transmitting a signal or data according to a predetermined communication protocol. The transmitter 1420 may forward an uplink signal to the base station or a downlink signal to the terminal through a corresponding channel. The receiver 1430 may be a receiving circuitry for receiving a signal or data according toa predetermined communication protocol. The receiver 1430 may receive the downlink signal from the base station or the uplink signal from the terminal through the corresponding channel.

FIG. 14 illustrates only example that is not limiting the embodiments. According to an embodiment, the repeater 1400 is a node constituting a wireless network and may include at least one processor for a relay function entity that amplifies and forwards the radio signal between the base station and the terminal and at least one processor for a control function entity that controls a relay operation of the relay function entity by receiving a control signal from the base station. In this case, each functional entity is configured to include the configurations illustrated in FIG. 14, and each controller may control side control information-related operations and existing relay operations.

The controller 1410 may transmit information on a beam of the repeater that can support communication between the repeater and the terminal. According to an embodiment, the controller 1410 may transmit the information on the number of supported beams to the base station through repeater capability signaling. However, this is only an example, and the information on the number of beams may be preset for each repeater and stored in the base station.

The controller 1410 may receive the side control information for the beam control of the repeater configured by the base station based on the beam index for the beam of the repeater. As described above, the base station may set beam indexes for each DL Tx beam or UL Rx beam according to the number of beams supported by the repeater.

According to an embodiment, the DL Tx beams supported by the repeater may be divided and set according to a cast type. For example, the DL Tx beams may be classified into a type 1 for broadcast, a type 2 for multicast/groupcast, and a type 3 for unicast. Alternatively, the DL Tx beams may be classified into a type 1 for broadcast/multicast/groupcast and a type 2 for unicast. In this case, the base station may set beam indexes for each type. In this case, both the type information and the beam index information may be used in the indication for each beam.

According to another embodiment, DL Tx beams and UL Rx beams may be divided according to a beam width type. For example, when secondary sweeping is performed with a narrow beam within a wide beam determined by performing primary sweeping with a wide beam, the base station may set the beam indexes for each of the wide beam and the narrow beam. In this case, both the beam width type information and the beam index information may be used in the indication for each beam.

The controller 1410 may receive the side control information for the beam control of the repeater configured by the base station based on the beam index. The controller 1410 may receive the side control information for the DL Tx beam or the UL Rx beam from the base station through the link c. That is, information on beams to be used by the repeater for signal relay between the base station and the terminal may be indicated through the side control information.

The side control information may include beam indication information divided into semi-static beam indication information and dynamic beam indication information. In this case, according to an embodiment, the set of dynamic beams and the set of semi-static beams supported by the repeater may be divided, configured, and indicated by respective beam indication information.

According to an embodiment, the type of beams according to the above-described cast type may be applied to the set of dynamic beams and the set of semi-static beams. For example, the set of semi-static beams may be applied to the above-described type 1 beams for broadcast/multicast/groupcast, and the set of dynamic beams may be applied to the type 2 beams for unicast.

However, this is only an example that is not limiting the embodiments. According to another embodiment, all the DL Tx beams and the UL Rx beams supported by the repeater may be targets of the semi-static beam indication information and the dynamic beam indication information, respectively, without separate distinction.

According to an embodiment, in the case of the dynamic beam indication information, the controller 1410 may configure the information indicating the DL Tx beam or the UL Rx beam to be used by the repeater and transmit the configured information from the base station through downlink control information (DCI). Along with the beam indication information, time resources to be used may also be determined from among a plurality of preconfigured time resources through higher layer signaling and transmitted through the DCI. In this case, for example, the beam indication information and the time resource allocation information may be indicated as different field values within the same DCI.

According to an embodiment, the semi-static beam indication information may be divided into periodic beam indication information and semi-persistent beam indication information. The controller 1410 may receive the periodic beam indication information or the semi-persistent beam indication information from the base station through the higher layer signaling such as the RRC signaling. In this case, the semi-static beam indication information may include beam index indication information and time resource allocation information.

The time resource allocation information may include period information, offset information, and duration information. That is, along with the period information in which the DL Tx beam or the UL Rx beam is used, duration information that may be defined as a start slot within one period, offset information for indicating a start symbol within a slot, and the number of symbols may be included in the time resource allocation information.

According to an embodiment, when the semi-static beam indication information collides with (e.g., overlaps with) the dynamic beam indication information in a predetermined time interval, the dynamic beam control information may be configured to have a higher priority than the semi-static beam control information. That is, when the same beam is dynamically indicated in the time interval in which the semi-static beam indication information is set, the dynamic beam indication information may be configured to have a higher priority than the semi-static beam indication information.

In addition, when the periodic beam control information collides with (e.g., overlaps with) the semi-persistent beam control information in the semi-static beam control information in a predetermined time interval, the semi-persistent beam control information may be configured to have a higher priority than the periodic beam control information.

The controller 1410 may transmit and receive data to and from the terminal based on the side control information. The controller 1410 may transmit data to and receive data from the terminal based on the dynamic beam indication information or the semi-static beam indication information received from the base station. That is, the controller 1410 may transmit the signal of the base station to the terminal using the DL Tx beam indicated by the base station. Similarly, the controller 1410 may be received using the UL Rx beam indicated by the base station.

In addition, when different types of beam indication information collide or overlap in the same time interval, the controller 1410 may transmit and receive the corresponding signal using the preferred beam according to the above-described priority.

As a result, by controlling the beam information used for the data transmission and reception between the repeater and the terminal, the optimal beam is used in consideration of various situations such as whether the terminal is connected, a location, and a channel condition. Accordingly, it is possible to provide the method and apparatus capable of improving the coverage and data transmission/reception performance of the repeater in accordance with the embodiments

The embodiments described above may be supported by the standard documents disclosed in at least one of the radio access systems such as IEEE 802, 3GPP, and 3GPP2. That is, the steps, configurations, and parts, which have not been described in the present embodiments, may be supported by the above-mentioned standard documents for clarifying the technical concept of the disclosure. In addition, all terms disclosed herein may be described by the standard documents set forth above.

The above-described embodiments may be implemented by any of various means. For example, the present embodiments may be implemented as hardware, firmware, software, or a combination thereof.

In the case of implementation by hardware, the method according to the present embodiments may be implemented as at least one of an application specific integrated circuit (ASIC), a digital signal processor (DSP), a digital signal processing device (DSPD), a programmable logic device (PLD), a field programmable gate array (FPGA), a processor, a controller, a microcontroller, or a microprocessor.

In the case of implementation by firmware or software, the method according to the present embodiments may be implemented in the form of an apparatus, a procedure, or a function for performing the functions or operations described above. Software code may be stored in a memory unit, and may be driven by the processor. The memory unit may be provided inside or outside the processor, and may exchange data with the processor by any of various well-known means.

In addition, the terms "system", "processor", "controller", "component", "module", "interface", "model", "unit", and the like may generally mean computer-related entity hardware, a combination of hardware and software, software, or running software. For example, the above-described components may be, but are not limited to, a process driven by a processor, a processor, a controller, a control processor, an entity, an execution thread, a program and/or a computer. For example, both the application that is running in a controller or a processor and the controller or the processor may be components. One or more components may be provided in a process and/or an execution thread, and the components may be provided in a single device (e.g., a system, a computing device, etc.), or may be distributed over two or more devices.

According to embodiments of the present disclosure, it is possible to provide a method and apparatus for relaying a radio signal in a wireless network of new radio (NR).

The above embodiments of the present disclosure have been described only for illustrative purposes, and those skilled in the art will appreciate that various modifications and changes may be made thereto without departing from the scope and spirit of the disclosure. Further, the embodiments of the disclosure are not intended to limit, but are intended to illustrate the technical idea of the disclosure, and therefore the scope of the technical idea of the disclosure is not limited by these embodiments. The scope of the present disclosure shall be construed on the basis of the accompanying claims in such a manner that all of the technical ideas included within the scope equivalent to the claims belong to the present disclosure.

## Claims

1. A method of controlling, by a base station, relay of a radio signal, the method comprising:
setting a beam index for a beam of a repeater used for communication between the repeater and a terminal;
configuring side control information for beam control of the repeater based on the beam index; and
transmitting the side control information to the repeater,
wherein the side control information includes beam indication information divided into semi-static beam indication information and dynamic beam indication information.

2. The method of claim 1, wherein the semi-static beam indication information is divided into periodic beam indication information and semi-persistent beam indication information.

3. The method of claim 1, wherein the semi-static beam indication information includes beam index indication information and time resource allocation information, and
the time resource allocation information includes period information, offset information, and duration information.

4. The method of claim 2, wherein, when the semi-static beam indication information collides with the dynamic beam indication information in a predetermined time period, the dynamic beam indication information is configured to have a higher priority than the semi-static beam indication information.

5. The method of claim 4, wherein, when the periodic beam indication information collides with the semi-continuous beam indication information in the semi-static beam indication information in a predetermined time interval, the semi-persistent beam indication information is configured to have a higher priority than the periodic beam indication information.

6. A method of performing, by a repeater, relay of a radio signal, the method comprising:
transmitting information on a beam of a repeater that allows communication between the repeater and a terminal;
receiving side control information for beam control of the repeater based on a beam index; and
transmitting and receiving data to and from the terminal based on the side control information,
wherein the side control information is divided into semi-static beam indication information and dynamic beam indication information.

7. The method of claim 6, wherein the semi-static beam indication information is divided into periodic beam indication information and semi-persistent beam indication information.

8. The method of claim 6, wherein the semi-static beam indication information includes beam index indication information and time resource allocation information, and
the time resource allocation information includes period information, offset information, and duration information.

9. The method of claim 7, wherein, when the semi-static beam indication information collides with the dynamic beam indication information in a predetermined time period, the dynamic beam indication information is configured to have a higher priority than the semi-static beam indication information.

10. The method of claim 9, wherein, when the periodic beam indication information collides with the semi-continuous beam indication information in the semi-static beam indication information in a predetermined time interval, the semi-persistent beam indication information is configured to have a higher priority than the periodic beam indication information.

11. A base station for controlling relay of a radio signal, comprising:
a transmitter;
a receiver; and
a controller configured to perform operations for controlling relay of a radio signal and for controlling the transmitter and the receiver,
wherein the controller sets a beam index for a beam of a repeater used for communication between a repeater and a terminal, configures side control information for beam control of the repeater based on the beam index, and transmits the side control information to the repeater, and
wherein the side control information is divided into semi-static beam indication information and dynamic beam indication information.

12. The base station of claim 11, wherein the semi-static beam indication information is divided into periodic beam indication information and semi-persistent beam indication information.

13. The base station of claim 11, wherein the semi-static beam indication information includes beam index indication information and time resource allocation information, and
the time resource allocation information includes period information, offset information, and duration information.

14. The base station of claim 12, wherein, when the semi-static beam indication information collides with the dynamic beam indication information in a predetermined time period, the dynamic beam indication information is configured to have a higher priority than the semi-static beam indication information.

15. The base station of claim 14, wherein, when the periodic beam indication information collides with the semi-continuous beam indication information in the semi-static beam indication information in a predetermined time interval, the semi-persistent beam indication information is configured to have a higher priority than the periodic beam indication information.
